# EUROPÄISCHE PATENTSCHRIFT

(11) **EP 2 684 745 B1**
(45) Veröffentlichungstag und Bekanntmachung des Hinweises auf die Patenterteilung: **11.03.2015**
(21) Anmeldenummer: 13166345.2
(22) Anmeldetag: 03.05.2013
(51) Int. Cl.: B60R 21/2165, B32B 7/00, B29C 37/00, B26D 3/00, C14B 1/00

(54) **Innenverkleidungsteil und Verfahren zu seiner Herstellung**
Internal trim component and method for its production
Pièce d'habillage intérieur et son procédé de fabrication

(30) Priorität: 11.07.2012 DE 102012106238
(43) Veröffentlichungstag der Anmeldung: 15.01.2014
(73) Patentinhaber: International Automotive Components Group GmbH, 40472 Düsseldorf (DE)
(72) Erfinder: Scharf, Dieter, 85560 Ebersberg (DE); Sasu, Anna, 47804 Krefeld (DE); Peters, Stephan, 47804 Krefeld (DE)
(74) Vertreter: Liesegang, Eva

(56) Entgegenhaltungen:
- EP-A1- 1 588 906
- WO-A1-2008/044137
- DE-A1- 10 240 439
- DE-A1- 10 244 311
- DE-U1- 29 511 172

## Beschreibung

Die Erfindung betrifft ein Innenverkleidungsteil, insbesondere für ein Kraftfahrzeug, und ein Verfahren zu seiner Herstellung.

Die Erfindung ist beispielsweise anwendbar auf Innenverkleidungsteile, wie eine Instrumententafel, in die eine Airbag-Abdeckung integriert ist. Das Innenverkleidungsteil weist eine Dekorschicht aus Leder oder einem lederähnlichen Material, wie Kunstleder, Alcantara oder ein Lederverbundmaterial, auf. Zu lederähnlichen Materialien zählen Materialien, die sich durch ähnliche Gebrauchseigenschaften und Einsatzmöglichkeiten wie echtes Leder auszeichnen. Sie können beispielsweise aus Lederresten oder -abfällen hergestellt sein oder auch in Form eines Kunstleders vorliegen.

Aus der DE 10 2009 008 726 A1 ist eine Airbag-Abdeckung bekannt, welche umfasst: ein Formteil, eine das Formteil überdeckende Sichtbedeckung aus Leder oder lederähnlichem Material und eine Schaumschicht zwischen dem Formteil und der Sichtbedeckung. Ferner ist zwischen der Schaumschicht und der Sichtbedeckung eine Zwischenschicht eingebracht, die ein höheres Elastizitätsmodul aufweist als die Sichtbedeckung, beispielsweise eine Folie, ein Gestricke oder Gewebe. Zur Bildung einer Aufreißlinie wird eine gemeinsame Schwächung durch das Formteil, die Schaumschicht und die Zwischenschicht gebildet, während die Sichtbedeckung selbst nicht geschwächt ist und auch keine Reduzierung ihrer Wandstärke aufweist, um das ästhetische Erscheinungsbild der Sichtbedeckung nicht zu beeinträchtigen.

Die DE 10 2006 055 861 B3 beschreibt ein Innenverkleidungsteil zum Abdecken eines Airbags mit einem Träger, einer Zwischenschicht aus einem Abstandsgewirke und einer Oberflächendekorschicht aus Leder oder Kunstleder. Zur Bildung einer Aufreißlinie sind Träger und Abstandsgewirke mit Ausnahme einiger verbleibender Stege entlang der Aufreißlinie vollständig durchbrochen oder auf andere Weise geschwächt, während das Oberflächendekor keine lokale Schwächung und auch keinen Naht aufweist. Stattdessen ist eine flächige Klebeverbindung zwischen dem Oberflächendekor und der Zwischenschicht in einem längs der Aufreißlinie verlaufenden Streifen auf einer Breite von etwa 4 mm ausgespart.

Die DE 10 2009 043 498 A1 beschreibt ein weiteres Innenverkleidungsteil mit einem Träger, einer Zwischenschicht und einer Dekorschicht, wobei der Träger und die Zwischenschicht zur Bildung einer Aufreißlinie geschwächt sind, die Dekorschicht im Bereich der Aufreißlinie jedoch keine Schwächung aufweist.

In den beiden Schriften wird das Oberflächendekor aus Leder oder lederähnlichem Material selbst nicht geschwächt, um zu verhindern, dass die Aufreißlinie von der Sichtseite des Innenverkleidungsteils her wahrnehmbar ist. Um dennoch das Aufreißen der Airbag-Abdeckung bei Auslösen des Airbags zu gewährleisten, werden andere Maßnahmen getroffen, wie das Einbringen einer Zwischenschicht oder das Aussparen der Verklebung im Bereich der Aufreißlinie.

Im Stand der Technik sind weitere Schriften bekannt, die Fahrzeuginnenverkleidungen mit einer Dekorschicht aus Leder betreffen, wobei zur Bildung einer Aufreißlinie auch die Dekorschicht von ihrer Unterseite her lokal geschwächt ist; siehe beispielsweise die DE 10 2005 013 477 B4, die EP 1 980 455 A2, die DE 10 2006 054 590 B3, die DE 10 2007 007 635 A1, die DE 10 2009 054 859 A1 und die EP 1 745 989B1.

Die EP1588906 A1 wird als nächstliegender Stand der Technik angesehen und offenbart ein Innenverkleidungsteil mit dem Merkmalen des Oberbegriffs der Ansprüche 1 und 12.

Bei der Herstellung von Innenverkleidungsteilen, die als Airbag-Abdeckung in einem Kraftfahrzeug dienen sollen, insbesondere solche mit einer Dekorschicht aus Leder oder einem lederähnlichen Material, die dem Innenverkleidungsteil einen sehr hochwertigen Eindruck verleiht, sind die Konstrukteure stets auf der Suche nach einem optimalen Kompromiss zwischen einem zuverlässigen und kontrollierbaren Aufreißverhalten der Airbag-Abdeckung bei Auslösung des Airbags und einem möglichst hochwertigen Erscheinungsbild, wobei die Aufreißlinien optisch nicht oder möglichst wenig wahrnehmbar sein sollen.

Es ist eine Aufgabe der Erfindung, ein Innenverkleidungsteil und ein Verfahren zu seiner Herstellung anzugeben, das eine Dekorschicht aus Leder oder einem lederähnlichem Material aufweist und als Airbag-Abdeckung genutzt werden kann, wobei die zur Bildung der Aufreißlinie der Airbag-Abdeckung notwendige Schwächung der Innenverkleidung von außen optisch und haptisch nicht wahrnehmbar sein soll. Diese Aufgabe wird durch ein Innenverteilungsteil gemäß Patentanspruch 1 sowie durch ein Verfahren gemäß Patentanspruch 14 gelöst. Bevorzugte Ausführungen der Erfindung sind in den abhängigen Ansprüchen angegeben.

Die Erfindung sieht ein Innenverkleidungsteil, insbesondere für einen Kraftfahrzeug vor, wie eine Instrumententafel, in die eine Airbag-Abdeckung integriert ist, mit einem Trägerbauteil, einer Dekorschicht aus Leder oder einem lederähnlichem Material und einer Abstandsschicht zwischen dem Trägerbauteil und der Dekorschicht, die aus einem Material hergestellt ist, das weicher ist als das Material des Trägerbauteils. Das Trägerbauteil, die Dekorschicht und die Abstandsschicht weisen jeweils eine lokale Materialschwächung auf, die eine Aufreißlinie bildet und ein kontrolliertes Aufreißen des Innenverkleidungsteils erlaubt, wenn eine vorgegebene Kraft auf das Trägerbauteil ausgeübt wird, wenn zum Beispiel ein Airbag auslöst und gegen die Unterseite des Trägerbauteils schlägt. Um zu verhindern, dass diese Materialschwächung, insbesondere die in der Abstandsschicht ausgebildete Materialschwächung, von der Oberseite der Dekorschicht her optisch und/oder haptisch wahrnehmbar ist, ist zumindest im Bereich der Aufreißlinie eine Zwischenschicht zwischen die Dekorschicht und die Abstandsschicht eingebracht, die selbst keine lokale Schwächung aufweist. Die Zwischenschicht besteht aus einem Vliesstoff, der aus einzelnen Fasern hergestellt ist und in sich nur einen geringen Zusammenhalt hat - anders als zum Beispiel ein Gewebe, Gestricke oder Gewirke aus Garnen - und auch ohne eigene lokale Schwächung leicht aufgerissen werden kann.

Das Vliesmaterial bildet einen Vliesstoff, dessen Aufreißverhalten ähnlich sein kann wie beispielsweise bei einem Faserstofftuch oder dergleichen. Denkbare Materialien für den Vliesstoff sind Thermo(bond)-Vliese, ab einem Flächengewicht von ca. 20g/m²; wasserstrahlverfestigte Vliese ab einem Flächengewicht von z. B. ca. 35g/m²; und Nadelvliese ab einem Flächengewicht von z. B. ca. 60 bis ca. 250g/m². Die Vliese können aus einem synthetischen Fasermaterial, z.B. aus PP, PE, PET, PA, PAN, Viskose, etc., hergestellt sein oder Mischfaservliese sein, z.B. PP-PE, PP-PET, PET-BicoPET, PET-Viskose, etc. Aufgrund der Kleberhaftung sind beispielsweise PET- oder Mischvliese gegenüber PP-Vliesen im Vorteil. Die

Dicke des Vlieses kann in der Größenordnung von z. B. ca. 0,1 mm bis 0,5 mm liegen.

Die Zwischenschicht kann als ein Streifen nur im Bereich der Schwächungslinie oder vollflächig zwischen Dekorschicht und Abstandsschicht vorgesehen sein. Sie verbirgt die insbesondere in der Abstandsschicht gebildete Aufreißlinie, so dass diese von außen optisch und haptisch nicht wahrnehmbar ist. Dieses Verbergen der Schwächung der Abstandsschicht ist besonders relevant bei Innenverkleidungen, die bereits einen gewissen Alterungsprozess durchlaufen haben, wobei sich entlang der die Aufreißlinie bildenden Schwächung in der Abstandsschicht ein Spalt bilden kann. Dies ist dann besonders gravierend, wenn als Abstandsschicht z. B. ein Gewirke, Gestricke oder Gewebe verwendet wird, das im Bereich der Schwächungslinie vollständig durchtrennt ist.

Es ist auch möglich, die Zwischenschicht aus zwei oder mehr Lagen aufzubauen, z. B. aus zwei Vlieslagen gleicher oder unterschiedlicher Beschaffenheit. Eine der Lagen könnte direkt auf die Unterseite der Leder-Dekorschicht aufgebracht werden, um einen oder mehrere Schnitte, welche die Schwächung bilden können, zusammenzuhalten. Eine zweite Lage kann direkt auf die Abstandsschicht aufgebracht werden, bevor Dekorschicht und Abstandsschicht verbunden werden.

In einer Ausführung der Erfindung sind das Trägerbauteil und die Abstandsschicht verklebt, in einer weiteren Ausgestaltung, die im Folgenden noch beschrieben ist, können zwischen Trägerbauteil und Abstandsschicht weitere Schichten eingebracht sein. Sofern die Zwischenschicht nur in Form eines Streifens entlang der Aufreißlinie vorgesehen ist, können Abstandsschicht und Dekorschicht in dem darüber hinaus gehenden Bereich auch direkt miteinander verklebt sein. Im Übrigen können erfindungsgemäß auch die Abstandsschicht und die Zwischenschicht sowie die Zwischenschicht und die Dekorschicht miteinander verklebt sein. Auch andere Verbindungstechniken sind denkbar.

In der bevorzugten Ausführung weist die Abstandsschicht ein Abstandsgewebe, -gestricke oder -gewirke auf. Alternativ ist es auch möglich, die Abstandsschicht beispielsweise als Schaumschicht zu bilden.

In einer Ausführung der Erfindung ist die Materialschwächung der Abstandsschicht so ausgebildet, dass diese zumindest abschnittsweise über ihre gesamte Dicke durchtrennt sei. Sie kann hierzu entlang der gesamten Aufreißlinie vollständig durchtrennt sein, oder zwischen einzelnen Schnitten können Stege verbleiben. In einer anderen Ausgestaltung kann die Abstandschicht in Form einzelner vorgefertigter Setzlinge aufgebracht werden.

In einer Ausgestaltung der Erfindung ist die Materialschwächung der Dekorschicht durch einen oder mehrere Schnitte in die Unterseite der Dekorschicht gebildet, wobei diese Schnitte die Dekorschicht nur durch ein Teil ihrer Dicke durchtrennen, beispielsweise zu etwa 2/3. In einer Ausgestaltung kann eine Restmaterialstärke von 0,4 bis 0,5 mm verbleiben. Es ist auch denkbar, die Dekorschicht durch eine andere Art der Schwächung, wie Schärfen oder Schleifen, zu bearbeiten.

In einer Ausgestaltung der Erfindung ist auf das Trägerbauteil eine Schaumschicht aufgebracht, über der eine Kunststoffhaut liegt, wobei die Abstandsschicht dann unmittelbar oder mittelbar auf die Kunststoffhaut aufgebracht ist. In dieser Ausgestaltung sollten auch die Schaumschicht und die Kunststoffhaut eine lokale Materialschwächung im Bereich der Aufreißlinie aufweisen. Diese Materialschwächung kann so ausgebildet sein, dass das Trägerbauteil und die Kunststoffhaut zumindest abschnittsweise über ihre ganze Dicke durchtrennt sind, während die Schaumschicht von der Seite des Trägerbauteils nur durch ein Teil ihrer Dicke durchtrennt ist.

Diese zuletzt genannte Ausgestaltung eignet sich besonders für solche Anwendungsformen, in denen das Trägerbauteil eine Oberflächenstruktur, zum Beispiel mit Sicken und Rippen, aufweist, die nicht der gewünschten Oberflächengestaltung des Innenverkleidungsteils entspricht. Die Kunststoffhaut kann dann, zum Beispiel als Slush-Haut, so ausgebildet werden, dass ihre Gestalt im Wesentlichen der gewünschten Oberflächengestalt der Innenverkleidung entspricht, und der Zwischenraum zwischen Trägerbauteil und Kunststoffhaut kann ausgeschäumt werden, wobei die so gebildete Schaumschicht über der Fläche des Innenverkleidungsteils ungleich stark ist und die Unterschiede in der Oberflächengestalt von Trägerbauteil und Kunststoffhaut ausgleicht.

Die Abstandsschicht kann mit der Kunststoffhaut verklebt werden.

In einer Ausführung der Erfindung kann an die Kunststoffhaut ein Körper zur Stabilisierung eines Randes der Abstandsschicht angeformt sein, um zu verhindern, dass die Dekorschicht, wenn sie um eine Außenkante des Innenverkleidungsteils gelegt wird, die Abstandsschicht in diesem Bereich zusammendrückt.

Die Erfindung sieht auch ein Verfahren zur Herstellung eines Innenverkleidungsteils vor, das die folgenden Verfahrensschritte umfasst: zunächst wird ein Trägerbauteil geformt, beispielweise durch Spritzgießen eines Kunststoffträgers oder durch Pressen und Verformen eines Faserverbundmaterials. Das Trägerbauteil wird beispielsweise durch Schneiden oder Fräsen einer Nut geschwächt, um eine Aufreißlinie zu bilden. Diese Nut kann das Trägerbauteil zumindest abschnittsweise durch seine gesamte Dicke hindurch durchtrennen. Eine Abstandsschicht wird mittelbar oder unmittelbar über dem Trägerbauteil aufgebracht, wobei die Abstandsschicht im Bereich der Aufreißlinie geschwächt, insbesondere abschnittsweise oder durchgehend unterbrochen ist. Eine Dekorschicht aus Leder oder einem lederähnlichen Material wird auf die Abstandsschicht aufgebracht, zum Beispiel aufkaschiert oder aufgeklebt, wobei auch die Dekorschicht eine Strukturschwächung im Bereich der Aufreißlinie aufweist. Erfindungsgemäß wird vor oder während des Aufbringens der Dekorschicht eine Zwischenschicht, die keine lokale Schwächung aufweist, zumindest im Bereich der Aufreißlinie zwischen die Dekorschicht und die Abstandsschicht eingebracht. Die Zwischenschicht kann zunächst auf die Abstandsschicht aufgelegt werden, bevor die Dekorschicht aufkaschiert wird. Es ist auch möglich, die Zwischenschicht zunächst mit der bereits mit der Strukturschwächung versehenen Dekorschicht zu verbinden und dann die Dekorschicht zusammen mit der Zwischenschicht auf die Abstandsschicht aufzubringen. Auch eine mehrlagige Zwischenschicht kann verwendet werden, die zwischen Dekorschicht und Abstandsschicht eingelegt oder insgesamt oder mit ihren einzelnen Lagen zunächst mit der Dekorschicht und/oder der Deckschicht verbunden wird.

In einem Ausführungsbeispiel wird zur Ausbildung der Innenverkleidung zusätzlich eine Kunststoffhaut ausgeformt, die der gewünschten Oberflächengestalt des Innenverkleidungsteils weitgehend entspricht. Es kann beispielsweise eine Slush-Haut sein. Dann werden das geformte Trägerbauteil und die Kunststoffhaut in ein Formwerkzeug eingelegt, und eine in dem Formwerkzeug zwischen dem Trägerbauteil und der Kunststoffhaut gebildeten Kavität wird mit einem Schaummaterial ausgeschäumt. Die Kunststoffhaut kann durch einen oder mehrere Schnitte entlang der Aufreißlinie geschwächt werden, und der Verbund aus dem Trägerbauteil und der an das Trägerbauteil angeformten Schaumschicht kann zum Beispiel durch Schneiden oder Fräsen einer Nut ausgehend von der Seite des Trägerbauteils geschwächt werden. Diese Nut kann sich zumindest abschnittsweise durch die gesamte Dicke des Trägerbauteils und durch einen Teil der Dicke der Schaumschicht erstrecken. Anschließend kann die Abstandsschicht auf die Kunststoffhaut aufgebracht werden, zum Beispiel durch Aufkleben.

Die Erfindung ist im Folgenden anhand eines Ausführungsbeispiels mit Bezug auf die Figuren näher erläutert. In den Figuren zeigen:
- Fig. 1: eine schematische Schnittdarstellung durch einen Innenverkleidungsteil gemäß einer Ausführung der Erfindung;
- Fig. 2: eine schematische Schnittdarstellung durch einen Randbereich des Innenverkleidungsteils gemäß einer Ausgestaltung der Erfindung;
- Fig. 3: eine schematische Schnittdarstellung durch einen Randbereich der Instrumententafel gemäß einer alternativen Ausgestaltung;
- Fig. 4: Gegenüberstellungen von Schnittdarstellungen durch eine Instrumententafel gemäß dem Stand der Technik sowie durch ein Teil der erfindungsgemäßen Instrumententafel; und
- Fig. 5: eine schematische Schnittdarstellung durch einen Innenverkleidungsteil gemäß einer weiteren Ausführung der Erfindung;
- Fig. 6: ein Ablaufdiagramm zur Veranschaulichung des erfindungsgemäßen Verfahrens.

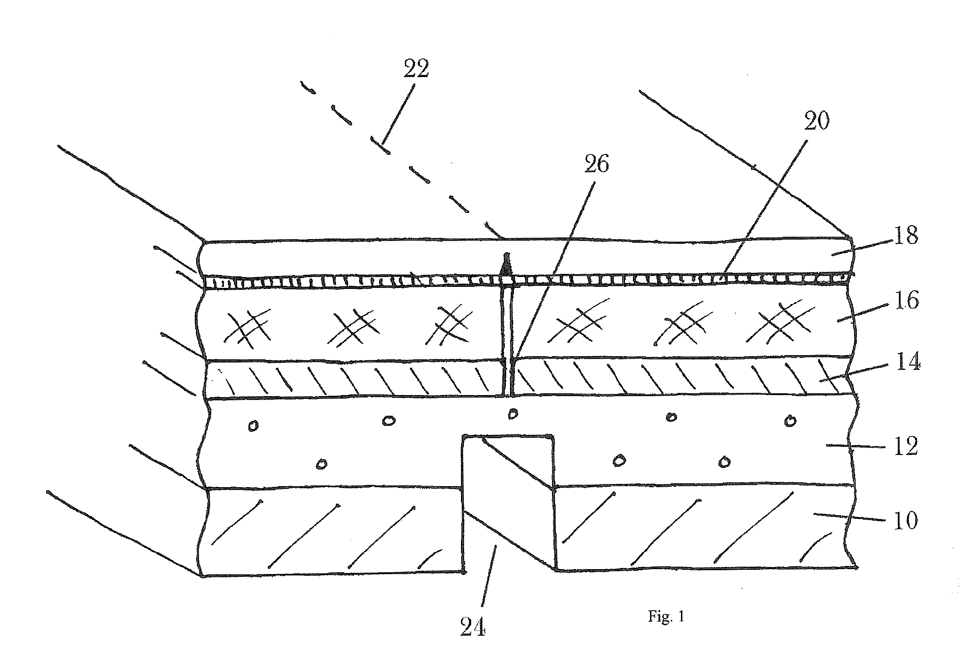

Fig. 1 zeigt in schematischer Schnittdarstellung einen möglichen Aufbau der erfindungsgemäßen Innenverkleidung. In diesem Ausführungsbeispiel umfasst die Innenverkleidung ein Trägerbauteil 10, eine Schaumschicht 12, eine Kunststoffhaut 14, eine Abstandsschicht 16 und eine Dekorschicht 18. Zwischen Abstandsschicht 16 und Dekorschicht 18 ist eine Zwischenschicht 20 eingebracht.

Das Trägerbauteil 10 kann ein Spritzgussteil, zum Beispiel aus Polypropylen, ABS oder jedem anderen geeigneten Kunststoff sein, das optional Fasern, zum Beispiel Glas- oder Kohlefasern, enthält. Es kann auch aus einer Fasermatte durch Erwärmen, Pressen und Verformen gebildet sein. Jedes Trägermaterial, das sich für den beabsichtigten Anwendungszweck, beispielsweise als Instrumententafel eines Kraftfahrzeugs eignet, kann verwendet werden.

Die Kunststoffhaut 14 ist beispielsweise eine Slush-Haut aus PVC, PPO oder einem anderen Kunststoff, die vorab und separat geformt wird. Die Kunststoffhaut 15 ist im Verhältnis zum Trägerbauteil dehnbar. Sie hat beispielsweise eine Dicke im Bereich von 0,8 bis 1,4 mm. Vorzugsweise ist die Kunststoffhaut 14 so geformt, dass sie der gewünschten Oberflächengestalt des Innenverkleidungsteils weitgehend entspricht.

Die zwischen dem Trägerbauteil 10 und der Kunststoffhaut 14 liegende Schaumschicht 12 kann beispielsweise aus Polyurethan (PUR) durch Ausschäumen des Raums zwischen dem Trägerbauteil 10 und der Kunststoffhaut 14 gebildet werden. Die Schaumschicht 12 kann über ihrer Fläche eine ungleichmäßige Dicke im Bereich von z.B. 0 bis 10 mm haben, um unterschiedliche Oberflächenstrukturen vom Trägerbauteil 10 und Kunststoffhaut 14 auszugleichen. Dadurch ist es möglich, die Kunststoffhaut 14 so zu bilden, dass sie im Wesentlichen die Gestalt der Sichtfläche 10 des Verkleidungsteils abbildet, während der Träger unabhängig hiervon mit Sicken, Rippen und anderen Komponenten, die von der Sichtseite hin nicht wahrnehmbar sein sollen, ausgebildet werden kann. Die Härte der Schaumschicht 12 liegt vorzugsweise im Bereich von 55 Shore A bis 75 Shore A.

An die Kunststoffhaut 14 schließt sich die Abstandsschicht 16 an, die aus einem Gewirke, Gestricke oder Gewebe gebildet sein kann, das mit der Kunststoffhaut 14 verklebt ist.

Auf die Abstandsschicht 16 wird die Deckschicht 18 aufkaschiert oder aufgeklebt. Diese besteht aus Leder oder einem lederähnlichen Material. Zu lederähnlichen Materialien zählen Materialien, die sich durch ähnliche Gebrauchseigenschaften und Einsatzmöglichkeiten wie echtes Leder auszeichnen. Sie können beispielsweise aus Lederresten oder -abfällen hergestellt sein und umfassen z. B. Kunstleder, Alcantara und Lederverbundmaterial.

Die Zwischenschicht 20 ist in dem gezeigten Ausführungsbeispiel jedenfalls im Bereich einer Aufreißlinie 22 zwischen die Deckschicht 18 und die Abstandschicht 16 eingefügt ist. Sie kann als Streifen über der Aufreißlinie oder über der gesamten Fläche oder über einen größeren Teil der Fläche des Innenverkleidungsteils, z. B. über einer vollständigen Airbagabdeckung vorgesehen sein. Die Zwischenschicht 20 umfasst in einer Ausführung ein Vliesmaterial und ist als Vliesstoff ausgebildet, der mit der Abstandsschicht 14 und der Dekorschicht 18 verklebt wird. In einem Ausführungsbeispiel wurde ein Thermobond-Vlies mit einem Flächengewicht von 20g/m² aus PET getestet. Vliese mit einer Dicke im Bereich von ca. 0,1 mm bis 0,5 mm haben sich in der Praxis als brauchbar erwiesen, ohne dass die Erfindung hierauf beschränkt sein sollte. Aufgrund der Kleberhaftung sind beispielsweise PET- oder Mischvliese gegenüber PP-Vliesen im Vorteil. Anstelle eines einlagigen Vliesstoffes kann auch eine Zwischenschicht 20 aus zwei oder mehr Lagen aufzubauen, z. B. aus zwei Vlieslagen gleicher oder unterschiedlicher Materialien und Beschaffenheit, aus einem Vliesstoff in Kombination mit einer Folie oder dergleichen.

Die Aufreißlinie 22 kann in dem in Fig. 1 gezeigten Innenverkleidungsteil wie folgt hergestellt werden: nachdem zunächst der Verbund aus dem Trägerbauteil 10, der Schaumschicht 12 und der Kunststoffhaut 16 gebildet ist, wird von der Seite des Trägerbauteils 10 aus einer Nut 24 durch das Trägerbauteil 10 und einem Teil der Schaumschicht 11 gefräst, wobei diese Nut durchgehend oder in Abschnitten, mit dazwischen verbleibenden Stegen, ausgebildet sein kann. Des Weiteren wird die Kunststoffschicht 14 durch einen kontinuierlichen Schnitt oder mehrere kleine Schnitte oder eine Perforation 26 im Bereich der Aufreißlinie 22 geschwächt, wobei diese Schnitte durch Laserschneiden, Messerschneiden, Wasserstrahlschneiden, etc., gebildet werden können und auch in das Material der Schaumschicht 12 eindringen können.

Anschließend wird die Abstandsschicht 16 aufgebracht, wobei diese in Form einzelner Setzlinge des Gewebes, Gestrickes oder Gewirkes vorgesehen werden kann, d.h. in separaten, vollständig voneinander getrennten Teilen, die z.B. über der Airbag-Abdeckung und außerhalb der Airbag-Abdeckung angeordnet sind. Die Abstandsschicht 16 muss dann nicht mehr geschnitten werden, weil sie bereits in getrennten Teilen eingesetzt wird.

Die Dekorschicht 18 aus Leder oder lederähnlichem Material wird vor dem Aufbringen auf das Innenverkleidungsteil von ihrer Rückseite her entlang der Aufreißlinie geschwächt, beispielsweise kontinuierlich oder diskontinuierlich eingeritzt, wobei diese Schwächung geradlinig, in Form einer Welle, einer Zickzack-Linie etc. ausgebildet sein kann. Die Schwächung kann außer durch Schneiden auch z.B. durch Schärfen oder Schleifen erfolgen. Eine Materialreststärke von beispielsweise 0,45 mm sollte verbleiben.

Die Zwischenschicht 20 kann vollflächig über der Abstandsschicht 16 oder nur im Bereich der Aufreißlinie 22 vorgesehen sein, und die Dekorschicht 18 wird, unter Zwischenschaltung der Zwischenschicht 20, auf die Abstandsschicht 16 aufkaschiert. Bei Verwendung einer mehrlagigen Zwischenschicht 20 kann eine der Lagen direkt auf die Unterseite der Leder-Dekorschicht 18 aufgebracht werden, um einen oder mehrere Schnitte, welche die Schwächung bilden können, zusammenzuhalten. Eine zweite Lage kann direkt auf die Abstandsschicht 16 aufgebracht werden, bevor Dekorschicht und Abstandsschicht verbunden werden.

Die Zwischenschicht 20 sorgt dafür, dass die darunter gebildete Materialschwächung in der Kunststoffhaut 14 und der Abstandsschicht 16 von der Dekorseite her nicht wahrnehmbar ist, und zwar weder optisch noch haptisch. Zusätzlich stabilisiert sie auch den Schwächungsschnitt in der Dekorschicht 18, so dass dieser auch bei Streckung des Leders z. B. durch Wärmeeintrag und bei Alterung des Leders auf der Sichtseite der Dekorschicht nicht wahrnehmbar wird. Andererseits ist die Zwischenschicht 20, die keine eigene lokale Schwächung aufweist, so beschaffen, dass ihr Material bei einem Aufreißen entlang der Aufreißlinie 22 leicht mit aufreißt und dem Aufbrechen der Innenverkleidung keinen nennenswerten Widerstand entgegensetzt.

In dem gezeigten Ausführungsbeispiel kann das Trägerbauteil eine Dicke in der Größenordnung von z.B. 1 bis 5 mm, spezieller 2 bis 3 mm haben. In einem Ausführungsbeispiel liegt die Stärke des Trägerbauteils 10 in der Größenordnung von z. B. 2,5 mm, ist aber in der Praxis natürlich abhängig von Material und Verwendungszweck. Die Schaumschicht hat, wie oben dargelegt, über der Fläche des Innenverkleidungsteils in der Regel eine variierende Dicke, im Bereich von 0 bis z.B. 8 oder 10 mm. Die Kunststoffhaut 14 kann eine Dicke in der Größenordnung von 1 mm haben, in einem Ausführungsbeispiel ist sie ungefähr 1,2 mm stark. Die Abstandsschicht 16 hat ihrerseits eine Dicke in der Größenordnung von etwa 1,5 bis 5 mm, beispielsweise etwa 3 mm. Die Dekorschicht 18 umfasst eine Lederschicht oder lederähnliche Schicht mit einer Dicke im Bereich von z. B. 0,8 bis 1,5 mm, in einem Ausführungsbeispiel ist sie etwa 1,2 mm stark. Die Zwischenschicht 20 hat eine geringe Dicke in der Größenordnung von etwa 0,1 bis 0,5 mm.

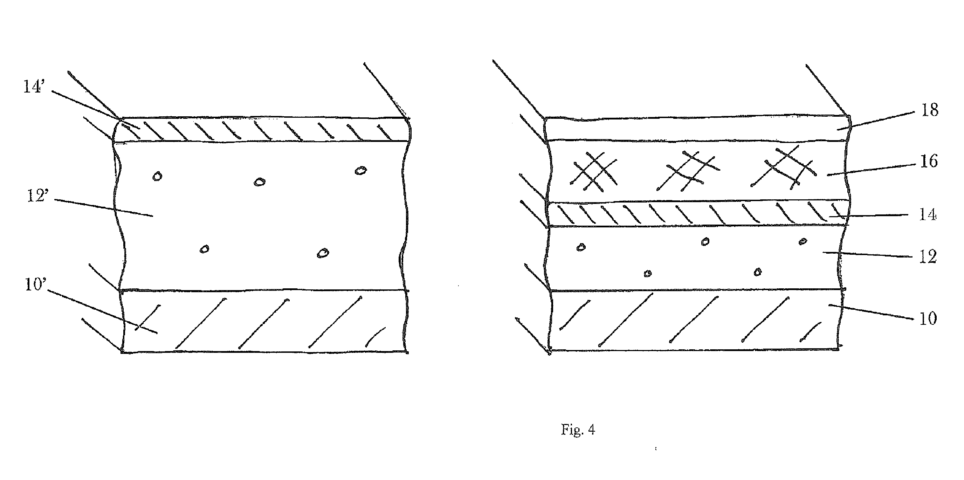

In Fig. 4 ist der Aufbau der Innenverkleidung der Fig. 1, ohne die Zwischenschicht 20, im Vergleich zu einer Innenverkleidung des Stands der Technik dargestellt, die nur aus einem Trägerbauteil 10', einer Schaumschicht 12' und einer Slush-Haut 14' aufgebaut ist. In Bezug auf diesen herkömmlichen Aufbau, in Fig. 4 links dargestellt, wird der Aufbau der Innenverkleidung gemäß dem Ausführungsbeispiel der Fig. 1 auch als Mindermaß-Haut bezeichnet, wobei mit demselben Grundaufbau aus Trägerbauteil 10, Schaumschicht 12 und Kunststoffhaut 14, jedoch mit einer reduzierten Dicke der Schaumschicht 12, ein Innenverkleidungsteil aufgebaut werden kann, dass eine verbesserte hochwertige Optik hat, welche durch die Leder-Dekorschicht 18 erzielt wird, sowie eine verbesserte Haptik aufgrund der Abstandsschicht 16.

Der in Fig. 1 und in Fig. 4 rechts gezeigte Aufbau kann ausgehend von der gleichen Trägerstruktur und Kunststoffhaut-Struktur wie bei dem herkömmlichen Aufbau (in Fig. 4 links) hergestellt werden. Während bei dem Aufbau in Fig. 4 links die Kunststoffhaut 14' die Sichtseite des Innenverkleidungsteils bilden kann, lässt sich mit dem Aufbau in Fig. 4 rechts, auf der Grundlage der gleichen Grundstruktur, durch Verringern der Dicke der Schaumschicht 12 eine höherwertige Gestaltungsvariante realisieren, welche die Abstandsschicht 16 und die Leder-Dekorschicht 18 umfasst, die hinzugefügt werden können, ohne die Gesamtdicke des Aufbaus zu vergrößern.

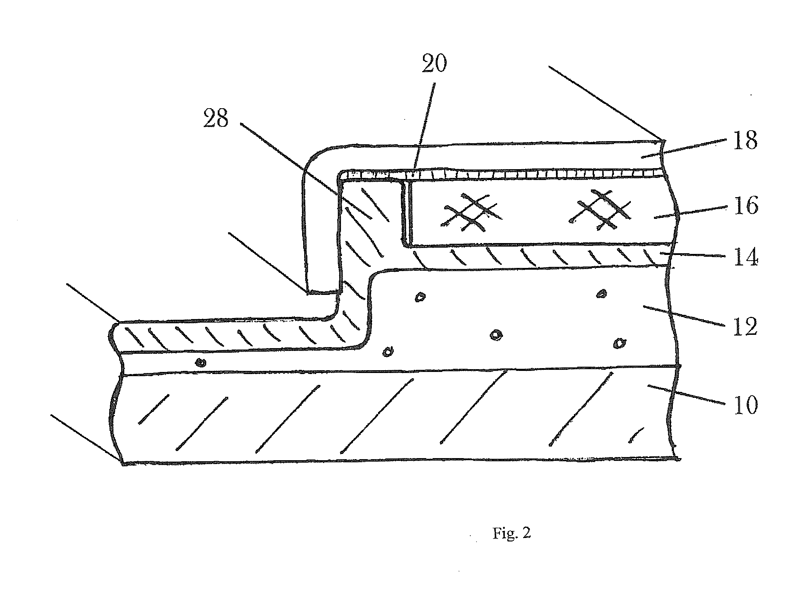

Fig. 2 zeigt eine Variante der erfindungsgemäßen Innenverkleidung, wobei die Zwischenschicht 20 über der gesamten Fläche der Abstandsschicht 16 zwischen die Abstandsschicht 16 und die Dekorschicht 18 eingebracht ist. In der Ausgestaltung der Fig. 2 ist im Randbereich der Innenverkleidung ein Körper 28 an die Kunststoffhaut 14 angeformt, der eine Art Kantenschutz bildet und dafür sorgt, dass die Dekorschicht 18, die um den Rand der Abstandsschicht 16 gelegt wird, diese in diesem Randbereich nicht zusammendrückt. Dadurch kann am Rand der Innenverkleidung oder an dem Übergang zu einem Nachbarbauteil (nicht gezeigt) für einen sauberen Abschluss gesorgt werden. Der Körper 28 kann beim Ausbilden der Kunststoffhaut 14, z.B. als Slush-Haut, unmittelbar mitausgebildet werden.

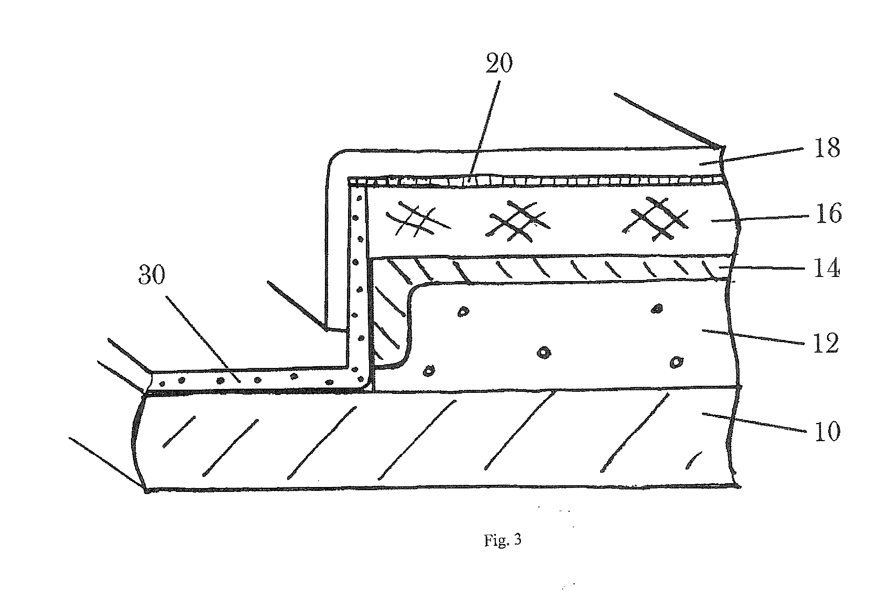

Alternativ ist es auch möglich, wie in Fig. 3 gezeigt, die Kante des Innenverkleidungsteils oder den Übergang zu einem Nachbarbauteil (nicht gezeigt) mithilfe eines Einlegebauteils 30 zu stabilisieren. Dies erfordert zwar einen Extra-Arbeitsschritt für das Einlegen des Bauteils 30, macht aber die Herstellung der Kunststoffhaut 14 einfacher. Das Einlegeteil 30 kann mit den weiteren Komponenten des Innenverkleidungsteils verschweißt, verklebt, verklippst oder auf andere Weise verbunden werden.

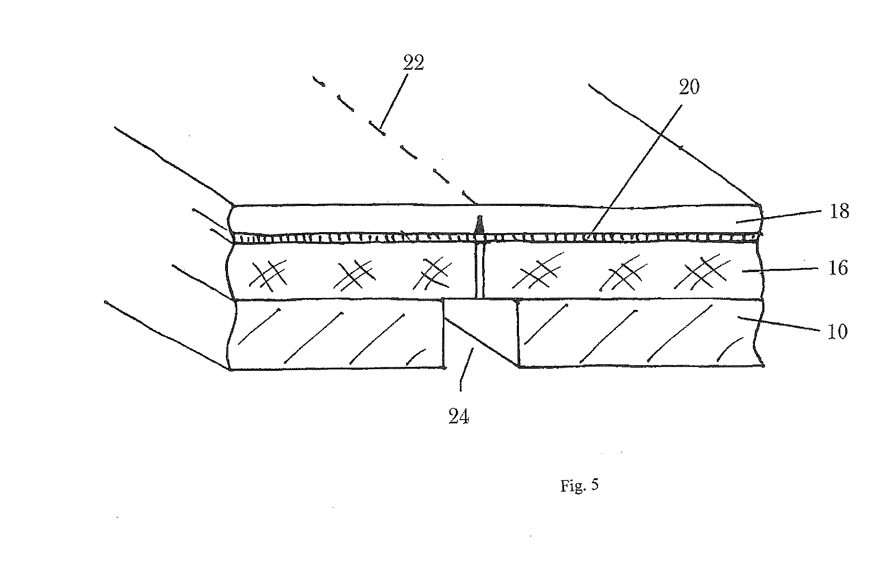

Fig. 5 zeigt in schematischer Schnittdarstellung einen möglichen Aufbau der erfindungsgemäßen Innenverkleidung gemäß einem weiteren Ausführungsbeispiel. In diesem Ausführungsbeispiel umfasst die Innenverkleidung das Trägerbauteil 10, die Abstandsschicht 16 und die Dekorschicht 18. Zwischen Abstandsschicht 16 und Dekorschicht 18 ist die Zwischenschicht 20 eingebracht. Gleiche Komponenten wir in den vorhergehenden Figuren sind mit denselben Bezugszeichen bezeichnet, und grundsätzlich gilt für diese Komponenten das oben Gesagte, beispielsweise hinsichtlich ihrer Materialien, Dicke, Herstellung und sonstigen Beschaffenheit.

Hinsichtlich des Aufbaus des Trägerbauteils 10 gilt das oben Gesagte.

In dieser Ausgestaltung ist die Abstandschicht 16 direkt auf das Trägerbauteil 10 aufgebracht. Sie kann aus einem Gewirke, Gestricke oder Gewebe gebildet sein kann, das mit dem Trägerbauteil 10 verklebt ist. Sie kann aber auch durch eine Schaumschicht gebildet werden.

Auf die Abstandsschicht 16 wird die Deckschicht 18 aufkaschiert oder aufgeklebt. Diese besteht aus Leder oder einem lederähnlichen Material. Hinsichtlich des Aufbaus der Deckschicht 18 gilt ebenfalls das oben Gesagte.

Die Zwischenschicht 20 ist in dem gezeigten Ausführungsbeispiel jedenfalls im Bereich einer Aufreißlinie 22 zwischen die Deckschicht 18 und die Abstandschicht 16 eingefügt ist. Sie kann als Streifen über der Aufreißlinie oder über der gesamten Fläche oder über einen größeren Teil der Fläche des Innenverkleidungsteils, z. B. über einer vollständigen Airbagabdeckung vorgesehen sein. Hinsichtlich des Aufbaus der Zwischenschicht 20 gilt ebenfalls das oben Gesagte.

Die Aufreißlinie 22 kann in dem in Fig. 1 gezeigten Innenverkleidungsteil wie folgt hergestellt werden: Eine Nut 24 wird durch das Trägerbauteil 10 gefräst, wobei diese Nut durchgehend oder in Abschnitten, mit dazwischen verbleibenden Stegen, ausgebildet sein kann. Anschließend wird die Abstandsschicht 16 aufgebracht, wobei diese in Form einzelner Setzlinge des Gewebes, Gestrickes oder Gewirkes vorgesehen werden kann, d.h. in separaten, vollständig voneinander getrennten Teilen, die z.B. über der Airbag-Abdeckung und außerhalb der Airbag-Abdeckung angeordnet sind. Die Abstandsschicht 16 muss dann nicht mehr geschnitten werden, weil sie bereits in getrennten Teilen eingesetzt wird.

Die Dekorschicht 18 aus Leder oder lederähnlichem Material wird vor dem Aufbringen auf das Innenverkleidungsteil von ihrer Rückseite her entlang der Aufreißlinie geschwächt, beispielsweise kontinuierlich oder diskontinuierlich eingeritzt oder eingeschnitten, wobei diese Schwächung geradlinig, in Form einer Welle, einer Zickzack-Linie etc. ausgebildet sein kann. Die Schwächung kann außer durch Schneiden auch z.B. durch Schärfen oder Schleifen erfolgen. Eine Materialreststärke von beispielsweise 0,45 mm sollte verbleiben.

Die Zwischenschicht 20 kann vollflächig über der Abstandsschicht 16 oder nur im Bereich der Aufreißlinie 22 vorgesehen sein, und die Dekorschicht 18 wird, unter Zwischenschaltung der Zwischenschicht 20, auf die Abstandsschicht 16 aufkaschiert. Bei Verwendung einer mehrlagigen Zwischenschicht 20 kann eine der Lagen direkt auf die Unterseite der Leder-Dekorschicht 18 aufgebracht werden, um einen oder mehrere Schnitte, welche die Schwächung bilden, zusammenzuhalten. Eine zweite Lage kann direkt auf die Abstandsschicht 16 aufgebracht werden, bevor Dekorschicht und Abstandsschicht verbunden werden.

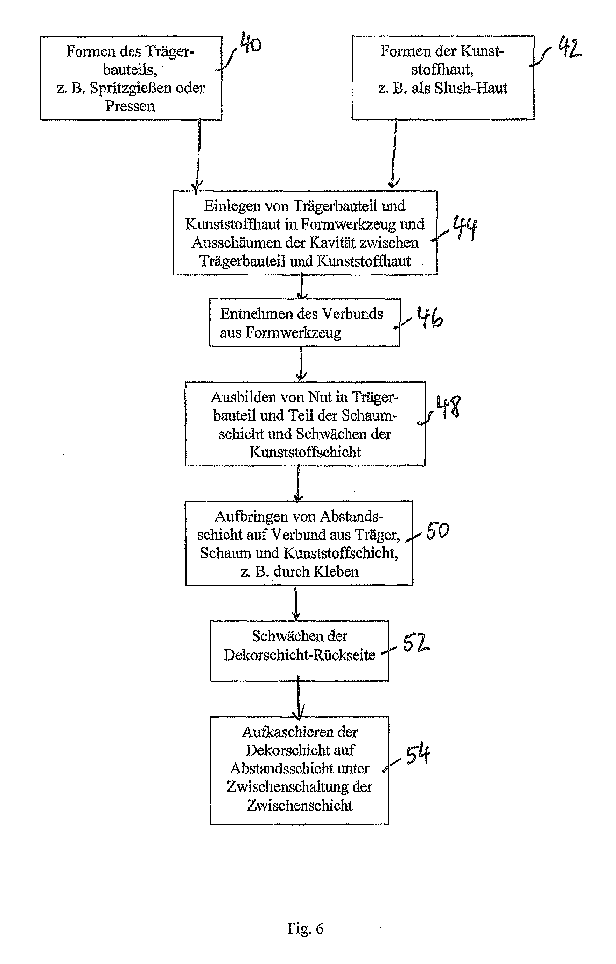

Die einzelnen Prozessschritte zur Herstellung des Innenverkleidungsteils der Fig. 1 sind im Folgenden nochmals mit Bezug auf Fig. 6 erläutert.

Zur Herstellung des Innenverkleidungsteils wird zunächst das Trägerbauteil 10 geformt, beispielsweise durch Spritzgießen oder Pressen einer Faserplatte, wobei alle gängigen Materialien, wie PP, ABS, etc., einschließlich Faseranteilen, Natur-Kunststofffasermatten, etc., verwendet werden können (Schnitt 40). Parallel wird die Kunststoffhaut 14, beispielsweise durch einen an sich bekannten Slush-Haut-Formungsprozess gebildet. Die Haut kann beispielsweise aus PVC oder PPO gefertigt werden und eine Dicke in der Größenordnung von 0,8 bis 1,4 mm haben (Schritt 42). Das Trägerbauteil 10 und die Kunststoffhaut 14 werden in ein Formwerkzeug (nicht gezeigt) eingelegt, wobei die Kunststoffhaut als eine Art Schale zum Aufnehmen eines Schaummaterials dienen kann. Die Form wird geschlossen, und die Kavität zwischen Trägerbauteil und Kunststoffhaut wird ausgeschäumt, um einen Verbund aus Träger, Schaum und Kunststoffschicht zu bilden (Schritt 44). In der Praxis kommt z.B. ein PUR-Schaum zum Einsatz, um eine Schaumschicht mit einer Härte in der Größenordnung von 55 bis 75 Shore A herzustellen.

Dieser Verbund wird aus dem Formwerkzeug entnommen (Schritt 46), und zur Herstellung der Aufreißlinie wird eine Nut in das Trägerbauteil und ein Teil der Schaumschicht geschnitten, beispielsweise gefräst. Die Kunststoffschicht kann von ihrer Oberseite her beispielsweise durch Schneiden oder Ritzen geschwächt werden, wobei hier ein durchgehender Schnitt, einzelne Schnitte, eine Perforation oder dergleichen gewählt werden können (Schritt 48).

Anschließend wird die Abstandsschicht 16 auf den Verbund aus Träger, Schaum und Kunststoffhaut aufgebracht, beispielsweise aufgeklebt, wobei diese Abstandsschicht im Bereich der Aufreißlinie unterbrochen ist (Schritt 50). Als Abstandschicht kann z. B. ein Gewirke, Gestricke oder Gewebe, aber auch eine Schaumschicht verwendet werden. Es ist möglich, im Voraus durch Stanzen hergestellte einzelne Setzlinge auf den Verbund aufzubringen. Dies kann einfacher sein, als eine durchgehende Abstandsschicht aufzubringen und anschließend zu schneiden.

Die vorab im Bereich der Aufreißlinie mit einer Schwächung auf ihrer Rückseite versehene Dekorschicht (Schritt 52) aus Leder oder lederähnlichem Material wird anschließend auf die Abstandsschicht aufkaschiert, wobei im Bereich der Aufreißlinie ein Streifen der Zwischenschicht 20 eingelegt wird. Dieser Streifen 20 kann vorab mit der Abstandsschicht 16 oder der Dekorschicht 18 oder bei Verwendung einer mehrlagigen Zwischenschicht 20 auch mit der Abstandsschicht 16 und der Dekorschicht 18 verklebt werden oder beim Aufkaschieren der Dekorschicht 18 auf die Abstandsschicht 16 mit diesen beiden Schichten verbunden werden.

Damit ist das Innenverkleidungsteil fertig gestellt.

## Patentansprüche

1. Innenverkleidungsteil, insbesondere für ein Kraftfahrzeug, mit
einem Trägerbauteil (10),
einer Dekorschicht (18) aus Leder oder einem lederähnlichen Material und
einer Abstandschicht (16) zwischen dem Trägerbauteil (10) und der Dekorschicht (18), die aus einem Material hergestellt ist, das weicher ist als das Material des Trägerbauteils (10),
wobei das Trägerbauteil (10), die Dekorschicht (18) und die Abstandschicht (16) jeweils eine lokale Materialschwächung aufweisen, die ein kontrolliertes Aufreißen des Innenverkleidungsteils erlaubt, wenn eine vorgegebene Kraft auf das Trägerbauteil (10) ausgeübt wird,
wobei zumindest im Bereich der Materialschwächung eine Zwischenschicht (20) zwischen der Dekorschicht (18) und der Abstandsschicht (16) liegt, die keine lokale Schwächung aufweist, **dadurch gekennzeichnet, dass** die Zwischenschicht (20) ein Vliesmaterial aufweist.

2. Innenverkleidungsteil nach Anspruch 1, wobei die Zwischenschicht (20) in Form eines Streifens entlang einer Schwächungslinie der Dekorschicht (18) angeordnet ist.

3. Innenverkleidungsteil nach Anspruch 1 oder 2, wobei das Vliesmaterial einen Thermobond-Vliesstoff bildet.

4. Innenverkleidungsteil nach einem der vorangehenden Ansprüche, wobei das Vliesmaterial einen Thermobond-Vliesstoff mit einem Flächengewicht von 20g/m² oder mehr; einen wasserstrahlverfestigten Vliesstoff mit einem Flächengewicht von 35g/m² oder mehr; oder einen Nadelvliesstoff mit einem Flächengewicht von 60 bis 250g/m² bildet.

5. Innenverkleidungsteil nach einem der vorangehenden Ansprüche, wobei das Vliesmaterial PET enthält.

6. Innenverkleidungsteil nach einem der vorangehenden Ansprüche, wobei das Vliesmaterial eine Dicke in der Größenordnung von 0,1 mm bis0,5 mm aufweist.

7. Innenverkleidungsteil nach einem der vorangehenden Ansprüche, wobei das Trägerbauteil (10) und die Abstandsschicht (16) und/oder die Abstandschicht (16) und die Dekorschicht (18) und/oder die Abstandsschicht (16) und die Zwischenschicht (20) und/oder die Zwischenschicht (20) und die Dekorschicht (18) miteinander verklebt sind.

8. Innenverkleidungsteil nach einem der vorangehenden Ansprüche, mit ferner einer Schaumschicht (12), die auf das Trägerbauteil (10) aufgebracht ist, und einer Kunststoffhaut (14), die auf die Schaumschicht (12) liegt, wobei die Abstandschicht (16) auf die Kunststoffhaut (14) aufgebracht ist.

9. Innenverkleidung nach Anspruch 8, wobei auch die Schaumschicht (12) und die Kunststoffhaut (14) eine lokale Materialschwächung aufweisen, wobei die Materialschwächungen des Trägerbauteils (10) und der Kunststoffhaut (14) optional so ausgebildet sind, dass diese zumindest abschnittsweise über ihre gesamte Dicke durchtrennt sind, und die Materialschwächung der Schaumschicht (12) optional so ausgebildet ist, dass diese von der Seite des Trägerbauteils (10) her nur durch einen Teil ihrer Dicke durchtrennt ist.

10. Innenverkleidungsteil nach einem der Ansprüche 8 bis 9, wobei an die Kunststoffhaut (14) ein Körper (28) zur Stabilisierung eines Randes der Abstandsschicht (16) angeformt ist.

11. Innenverkleidungsteil nach einem der vorangehenden Ansprüche, das als Airbag-Abdeckung in einem Kraftfahrzeug ausgebildet ist.

12. Verfahren zur Herstellung eines Innenverkleidungsteils, mit den Verfahrensschritten:
Formen eines Trägerbauteils (10), zum Beispiel durch Spritzgießen oder Pressen;
Schwächen des Trägerbauteils (10), z.B. durch Schneiden oder Fräsen einer Nut, die das Trägerbauteil (10) zumindest abschnittsweise durch seine gesamte Dicke durchtrennt, um eine Aufreißlinie (22) zu bilden;
Aufbringen einer Abstandsschicht (16) über dem Trägerbauteil (10), wobei die Abstandsschicht (16) im Bereich der Aufreißlinie (22) unterbrochen ist;
Aufbringen, insbesondere Aufkaschieren einer Dekorschicht (18) aus Leder oder einem lederähnlichen Material auf die Abstandsschicht (16), wobei die Dekorschicht (18) eine Strukturschwächung im Bereich der Aufreißlinie (22) aufweist; **dadurch gekennzeichnet, dass** vor oder während des Aufbringens der Dekorschicht (18) eine Zwischenschicht (20) aus einem Vliesmaterial, die keine lokale Schwächung aufweist, zumindest im Bereich der Aufreißlinie (22) zwischen die Dekorschicht (18) und die Abstandsschicht (16) eingebracht wird.

13. Verfahren nach Anspruch 12, mit den weiteren Verfahrensschritten:
Formen einer Kunststoffhaut (14), welche der Oberflächengestalt des Innenverkleidungsteils weitgehend entspricht;
Einlegen des Trägerbauteils (10) und der Kunststoffhaut (14) in ein Formwerkzeug und Ausschäumen einer in dem Formwerkzeug zwischen dem Trägerbauteil (10) und der Kunststoffhaut (14) gebildeten Kavität;
Schwächen der Kunststoffhaut (14) durch Ausführen eines oder mehrere Schnitte durch die Kunststoffhaut;
Schwächen des Verbunds aus Trägerbauteil (10) und während des Ausschäumens gebildeter Schaumschicht (12) durch Schneiden oder Fräsen einer Nut ausgehend von der Seite des Trägerbauteils (10), wobei die Nut das Trägerbauteil (10) zumindest abschnittsweise durch seine gesamte Dicke und die Schaumschicht (12) durch nur einen Teil ihrer Dicke durchtrennt; und
Aufbringen, insbesondere Aufkleben der Abstandsschicht (16) auf die Kunststoffhaut (14).

14. Verfahren nach Anspruch 12 oder 13, wobei die Zwischenschicht (20) in Form eines Streifens entlang der Aufreißlinie (22) der Dekorschicht (18) angeordnet wird.

15. Verfahren nach einem der Ansprüche 12 bis 14, wobei das Trägerbauteil (10) und die Abstandsschicht (16) und/oder die Abstandschicht (16) und die Dekorschicht (18) und/oder die Abstandsschicht (16) und die Zwischenschicht (20) und/oder die Zwischenschicht (20) und die Dekorschicht (18) miteinander verklebt werden.

## Claims

1. Interior trim part, in particular for a motor vehicle, the trim part including:
a substrate (10);
a decorative layer (18) made from leather or a leather-like material; and
a spacer layer (16) between the substrate (10) and the decorative layer (18), the spacer layer being made from a material that is softer than the material of the substrate (10);
wherein the substrate (10), the decorative layer (18) and the spacer layer (16) each comprises a localized area of weakened material which allows for a controlled tearing of the interior trim part when a predetermined amount of force is applied to the substrate (10);
wherein at least in the area of the weakened material, an intermediate layer (20) is placed between the decorative layer (18) and the spacer layer (16), the intermediate layer not having a localized weakened area, **characterized in that** the intermediate layer (20) comprises a fleece material.

2. Interior trim part according to claim 1 wherein the intermediate layer (20) is arranged in the shape of a strip along a weakening line of the decorative layer (18).

3. Interior trim part according to claim 1 or claim 2 wherein the fleece material forms a thermo bond fleece material.

4. Interior trim part according to one of the preceding claims wherein the fleece material forms a thermo bond fleece material having an area weight of 20 g/m² or more; a water jet enforced fleece material having an area weight of 35 g/m² or more; or a needle fleece material having an area weight of 60 to 250 g/m².

5. Interior trim part according to one of the preceding claims wherein the fleece material comprises PET.

6. Interior trim part according to one of the preceding claims wherein the fleece material has a thickness in range of 0.1 to 0.5 mm.

7. Interior trim part according to one of the preceding claims wherein the substrate (10) and the spacer layer (16) and/or the spacer layer (16) and the decorative layer (18) and/or the spacer layer (16) and the intermediate layer (20) and/or the intermediate layer (20) and the decorative layer (18) are bonded to each other.

8. Interior trim part according to one of the preceding claims, further comprising a foam layer (12) which is applied to the substrate and a plastic skin (14) which is placed over the foam layer (12) wherein the spacer layer (16) is applied to the plastic skin (14).

9. Interior trim part according to claim 8 wherein also the foam layer (12) and the plastic skin (14) comprise an area of weakened material wherein the area of weakened material of the substrate (10) and the plastic skin (14) optionally is formed so that it penetrates through their entire thickness, at least in sections thereof, and the area of weakened material of the foam layer (12) optionally is formed so that the foam layer, from the side facing the substrate (10), is severed through part of its thickness.

10. Interior trim part according to claim 8 or claim 9 wherein a body (28) for stabilizing an edge of the spacer layer (16) is integrated with the plastic skin (14).

11. Interior trim part according to one of the preceding claims which is provided as an airbag cover of a motor vehicle.

12. Method for producing an interior trim part, comprising the steps of:
forming a substrate (10), e.g. by injection molding or pressing;
weakening the substrate (10), e.g. by cutting or milling a groove which penetrates the substrate (10) through its entire thickness, at least in sections thereof, for forming a tear line (22);
applying a spacer layer (16) over the substrate (10) wherein the spacer layer (16) is interrupted in the area of the tear line (22);
applying, in particular laminating a decorative layer (18) onto the spacer layer (16), the decorative layer being made from leather or a leatherlike material and having a structural weakened area in the region of the tear line (22);
**characterized in that**, before or during the application of the decorative layer (18) an intermediate layer (20) is inserted at least in the region of the tear line (20), between the decorative layer (18) and the spacer layer (16), wherein the intermediate layer is made from a fleece material not having a localized weakened area.

13. Method according to claim 12, comprising the further steps of:
forming a plastic skin (14), substantially corresponding to the surface shape of the interior trim part;
inserting the substrate (10) and the plastic skin (14) into a molding tool and filling a cavity, formed in the molding tool between the substrate (10) and the plastic skin (14), by foaming;
weakening the plastic skin (14) by making one or more cuts through the plastic skin;
weakening the composite of the substrate (10) and the foam layer (12) produced during the foaming step, by cutting or milling a groove from the side of the substrate (10) wherein the groove penetrates the substrate (10) through its entire thickness, at least in sections thereof, and penetrates the foam layer (12) through only part of its thickness;
and
applying, in particular bonding the spacer layer (16) to the plastic skin (14).

14. Method according to claim 12 or claim 13 wherein the intermediate layer (20), in the form of a strip, is arranged along the tear line (22) of the decorative layer (18).

15. Method according to one of the claims 12 to 14 wherein the substrate (10) and the spacer layer (16) and/or the spacer layer (16) and the decorative layer (18) and/or the spacer layer (16) and the intermediate layer (20) and/or the intermediate layer (20) and the decorative layer (18) are bonded to each other.

## Revendications

1. Partie de carénage interne, plus particulièrement pour un véhicule automobile, avec un composant porteur (10),
une couche décorative (18) en cuir ou dans un matériau semblable au cuir et
une couche de séparation (16) entre le composant porteur (10) et la couche décorative (18),
constituée d'un matériau qui est plus souple que le matériau du composant porteur (10),
le composant porteur (10), la couche décorative (18) et la couche de séparation (16) comprenant chacun un affaiblissement local du matériau permettant un déchirement contrôlé de la partie de carénage interne lorsqu'une force prédéterminée est exercée sur le composant porteur (10), une couche intermédiaire (20) ne présentant aucun affaiblissement local se trouvant entre la couche décorative (18) et la couche de séparation (16), au moins au niveau de l'affaiblissement du matériau,
**caractérisé en ce que**
la couche intermédiaire (20) comprend un matériau non tissé.

2. Partie de carénage interne selon la revendication 1, la couche intermédiaire (20) étant disposée sous la forme d'une bande le long d'une ligne d'affaiblissement de la couche décorative (18).

3. Partie de carénage interne selon la revendication 1 ou 2, le matériau non tissé formant un non-tissé à isolation thermique.

4. Partie de carénage interne selon l'une des revendications précédentes, le matériau non tissé formant un non-tissé à isolation thermique avec un grammage de 20 g/cm² ou plus, un non-tissé résistant aux jets d'eau avec un grammage de 35 g/cm² ou plus ; ou un non-tissé aiguilleté avec un grammage de 60 à 250 g/cm².

5. Partie de carénage interne selon l'une des revendications précédentes, le matériau non tissé contenant du PET.

6. Partie de carénage interne selon l'une des revendications précédentes, le matériau non tissé présentant une épaisseur de l'ordre de 0,1 mm à 0,5 mm.

7. Partie de carénage interne selon l'une des revendications précédentes, le composant porteur (10) et la couche de séparation (16) et/ou la couche de séparation et la couche décorative (18) et/ou la couche de séparation (16) et la couche intermédiaire (20) et/ou la couche intermédiaire (20) et la couche décorative (18) étant collées ensemble.

8. Partie de carénage interne selon l'une des revendications précédentes, avec en outre une couche de mousse (12) posée sur le composant porteur (10), et un revêtement en matière plastique (14) posé sur la couche de mousse (12), la couche de séparation (16) étant posée sur le revêtement en matière plastique (14).

9. Partie de carénage interne selon la revendication 8, la couche de mousse (12) et le revêtement en matière plastique (14) présentant un affaiblissement local du matériau, les affaiblissements de matériau du composant porteur (10) et du revêtement en matière plastique (14) étant conçus, en option, de façon à ce que celui-ci soit séparé par portions sur toute son épaisseur, et l'affaiblissement de matériau de la couche de mousse (12) étant conçue, en option, de façon à ce qu'elle soit séparée, du côté du composant porteur (10) seulement sur une partie de son épaisseur.

10. Partie de carénage interne selon l'une des revendications 8 et 9, un corps (28) permettant de stabiliser un bord de la couche de séparation (16) étant moulé sur le revêtement en matière plastique (14).

11. Partie de carénage interne selon l'une des revendications précédentes, qui est conçue comme la protection d'un airbag dans un véhicule automobile.

12. Procédé de fabrication d'une partie de carénage interne comprenant les étapes suivantes : façonnage d'un composant porteur (10), par exemple par injection ou pressage ; affaiblissement du composant porteur (10), par exemple par découpe ou fraisage d'une rainure, qui sépare le composant porteur (10) au moins par portions sur toute son épaisseur, afin de former une ligne de déchirement (22) ;
application d'une couche de séparation (16) sur le composant porteur (10), la couche de séparation (16) étant interrompue au niveau de la ligne de déchirement (22) ;
pose, plus particulièrement laminage d'une couche décorative (18) en cuir ou dans un matériau semblable au cuir sur la couche de séparation (16), la couche décorative (18) présentant un affaiblissement de sa structure au niveau de la ligne de déchirement (22) ;
**caractérisé en ce que**
avant ou pendant l'application de la couche décorative (18), une couche intermédiaire (20) en matériau non tissé ne présentant aucun affaiblissement local, est posé au moins au niveau de la ligne de déchirement (22) entre la couche décorative (18) et la couche de séparation (16).

13. Procédé selon la revendication 12, comprenant les étapes supplémentaires suivantes :
façonnage d'un revêtement en matière plastique (14), correspondant globalement à la forme superficielle de la partie de carénage interne ;
insertion du composant porteur (10) et du revêtement en matière plastique (14) dans un outil de formage et moussage d'une cavité formée dans l'outil de formage entre le composant porteur (10) et le revêtement en matière plastique (14) ;
affaiblissement du revêtement en matière plastique (14) grâce à la réalisation d'une ou plusieurs découpes dans le revêtement en matière plastique ;
affaiblissement du composite constitué du composant porteur (10) et de la couche de mousse (12) formée pendant le moussage, par découpe ou fraisage d'une rainure à partir du côté du composant porteur (10), la rainure séparant le composant porteur (10) au moins par portions sur toute son épaisseur et la couche de mousse (12) sur seulement une partie de son épaisseur ; et
pose, plus particulièrement collage de la couche de séparation (16) sur le revêtement en matière plastique (14).

14. Procédé selon la revendication 12 ou 13, la couche intermédiaire (20) étant disposée sous la forme d'une bande le long de la ligne de déchirement (22) de la couche décorative (18).

15. Procédé selon l'une des revendications 12 à 14, le composant porteur (10) et la couche de séparation (16) et/ou la couche de séparation (16) et la couche décorative (18) et/ou la couche de séparation (16) et la couche intermédiaire (20) et/ou la couche intermédiaire (20) et la couche décorative (18) étant collées ensemble.
